# EUROPÄISCHE PATENTSCHRIFT

(11) **EP 1 905 559 B1**
(45) Veröffentlichungstag und Bekanntmachung des Hinweises auf die Patenterteilung: **25.03.2009**
(21) Anmeldenummer: 06020488.0
(22) Anmeldetag: 28.09.2006
(51) Int. Cl.: B27M 1/08, B23Q 7/00

(54) **Bearbeitungsvorrichtung**
Machining apparatus
Dispositif d'usinage

(43) Veröffentlichungstag der Anmeldung: 02.04.2008
(73) Patentinhaber: Homag Holzbearbeitungssysteme AG, 72296 Schopfloch (DE)
(72) Erfinder: Haungs, Jürgen, 72250 Freudenstadt-Grüntal (DE); Gauss, Achim, 72280 Dornstetten/Hallwangen (DE); Rathgeber, Peter, 72280 Dornstetten (DE)
(74) Vertreter: HOFFMANN EITLE

(56) Entgegenhaltungen:
- DE-A1- 2 208 186
- DE-A1- 19 627 946
- DE-A1- 19 756 338
- US-A1- 4 589 184

## Beschreibung

### Technisches Gebiet

Die Erfindung betrifft eine Bearbeitungsvorrichtung nach dem Oberbegriff von Anspruch 1.

### Stand der Technik

Im Bereich der holzbearbeitenden Industrie werden für die Bearbeitung plattenförmiger Werkstücke, z.B. Holz-, Span-oder Laminatplatten aus holzähnlichen Werkstoffen, nacheinander verschiedene Bearbeitungsmaschinen für die jeweilige Bearbeitung (z.B. Bohren, Kantenfräsen, Nutenschneiden, Kantenanleimen etc.) eingesetzt. Zwischen den einzelnen Maschinen oder Stationen werden die Werkstücke dann auf Förderbändern oder ähnlichen Einrichtungen fortbewegt. Zu Zwecken einer schnelleren und genaueren Bearbeitung werden heutzutage in großem Umfang Durchlaufmaschinen eingesetzt, bei denen die Werkstücke ohne angehalten zu werden entlang eines Förderwegs von verschiedenen Bearbeitungswerkzeugen bzw. -aggregaten in den Durchlaufmaschinen bearbeitet werden. In den letzten Jahren ist die hierbei eingesetzte Vorschubgeschwindigkeit stark angestiegen, und Werte von 200 m/min und mehr sind keine Seltenheit. Dies hat zu einem Wesentlichen Effizienzzuwachs und somit zu einer Kostenersparnis geführt, und eine weitere Erhöhung der Vorschubgeschwindigkeiten wird vom Markt angestrebt und gefordert.

Um bei Durchlaufmaschinen eine genaue Relativpositionierung zwischen den zu bearbeitenden Werkstücken und den ggf. mitfahrenden Bearbeitungsaggregaten zu erreichen, sind die Bearbeitungsaggregate üblicherweise mit einem Anschlag ausgestattet, gegen den die Werkstücke gefördert werden. Hierbei besteht jedoch insbesondere bei hohen Durchlaufgeschwindigkeiten die Gefahr, dass die Oberfläche der Werkstücke durch das Auftreffen auf den Anschlag beschädigt werden. Eine derartige Bearbeitungsvorrichtung nach dem Oberbegriff von Anspruch 1 wurde zuletzt beispielsweise in der Zeitschrift "Holzbearbeitung", Heft 9, 2005, S. 11-12 offenbart.

### Darstellung der Erfindung

Es ist daher Aufgabe der Erfindung, eine Bearbeitungsvorrichtung der eingangs genannten Art bereitzustellen, die bei zügigem Betrieb eine möglichst geringe Beschädigung der bearbeiteten Werkstücke ermöglicht.

Diese Aufgabe wird erfindungsgemäß durch eine Bearbeitungsvorrichtung mit den Merkmalen von Anspruch 1 gelöst. Besonders vorteilhafte Weiterbildungen der Erfindung sind in den abhängigen Ansprüchen angegeben.

Der Erfindung liegt der Gedanke zugrunde, bei einer gattungsgemäßen Vorrichtung den mindestens einen Anschlag und das mindestens eine Bearbeitungsaggregat betrieblich zu entkoppeln. Zu diesem Zweck ist erfindungsgemäß vorgesehen, dass das mindestens eine Bearbeitungsaggregat mindestens einen Aggregatantrieb aufweist, so dass der mindestens eine Anschlag und das mindestens eine Bearbeitungsaggregat in Förderrichtung unabhängig voneinander verfahrbar sind. Auf diese Weise wird die bewegte Masse des mindestens einen Anschlages beträchtlich vermindert, so dass eine hohe Durchlaufgeschwindigkeit bei gleichzeitig geringer Beschädigungsgefahr der durchlaufenden Werkstücke ermöglicht wird. Darüber hinaus bietet die erfindungsgemäße Entkoppelung jedoch auch eine erhöhte Flexibilität der Bearbeitungsvorrichtung, da die Bearbeitungsaggregate einzeln oder gruppenweise frei in eine gewünschte Bearbeitungsposition verfahren werden können und nicht an ein vorbestimmtes Raster gebunden sind.

Sowohl der mindestens eine Anschlagantrieb als auch der mindestens eine Aggregatantrieb können im Rahmen der vorliegenden Erfindung auf unterschiedlichste Art und Weise ausgestaltet sein. Im Hinblick auf die erfindungsgemäß angestrebte, hohe Durchlaufgeschwindigkeit bei gleichzeitig geringer Beschädigungsgefahr der Werkstücke hat es sich jedoch als vorteilhaft erwiesen, dass insbesondere der Anschlagantrieb, aber auch der Aggregatantrieb jeweils einen Linearantrieb aufweist. Bei vielen Anwendungen wird es jedoch aus ausreichend sein, dass jedenfalls der Aggregatantrieb einen einfacheren und kostengünstigeren Antrieb aufweist, wie beispielsweise einen Servomotor.

Eine Weiterbildung der Erfindung ist vorgesehen, dass der mindestens eine Anschlagantrieb und/oder der mindestens eine Aggregatantrieb jeweils eine Wegmesseinrichtung zum Messen des Verfahrweges aufweist. Auf diese Weise wird es problemlos möglich, die Verfahrwege der jeweiligen Antriebe bzw. des Anschlages und der Aggregate präzise aufeinander abzustimmen, sodass die Bearbeitungsaggregate die gewünschten Bearbeitungen in einer Relativbeziehung zum Anschlag während des (Durchlauf-Betriebes) ausführen können. Dabei ist es besonders bevorzugt, dass die Wegmesseinrichtung(en) mit einer Steuereinrichtung in Verbindung stehen, sodass die Wegdaten von der Steuereinrichtung eingelesen werden können und auf dieser Grundlage die einzelnen Betriebsbauteile der Vorrichtung, insbesondere die Antriebe gesteuert werden können.

Die Bearbeitungsaggregate und die jeweiligen Antriebe können jeweils separat auf eigenen Führungseinrichtungen angeordnet sein, um entlang der Förderrichtung verschiebbar bzw. verfahrbar zu sein. Um jedoch eine geringe bewegte Masse der Bauteile zu ermöglichen, ist gemäß einer Weiterbildung der Erfindung vorgesehen, dass das mindestens eine Bearbeitungsaggregat und der mindestens eine Aggregatantrieb jeweils auf einem Schlitten montiert sind, der entlang der Fördereinrichtung auf einer Führung verschiebbar ist. Dabei kann ein Schlitten beispielsweise auch mehrere Bearbeitungsaggregate oder Antrieb(e) tragen.

Art und Ausgestaltung des mindestens einen Bearbeitungsaggregats sind im Rahmen der vorliegenden Erfindung nicht besonders beschränkt. Als besonders vorteilhaft hat es sich erwiesen, dass zumindest ein Bearbeitungsaggregat dazu vorgesehen ist, eine spanende Bearbeitung der Werkstücke auszuführen, beispielsweise eine Bohr-, Fräs- oder Sägebearbeitung. Alternativ oder zusätzlich ist es jedoch ebenso vorgesehen, dass mindestens ein Bearbeitungsaggregat Dübel in die Werkstücke einbringen kann, beispielsweise in ein zuvor durch ein Bohraggregat erstelltes Bohrloch. Auf diese Weise eignet sich die erfindungsgemäße Vorrichtung besonders gut zur Bearbeitung bzw. Veredelung von Korpusteilen im Durchlauf.

Die Erfindung stellt ferner ein vorteilhaftes Bearbeitungsverfahren unter Einsatz der erfindungsgemäßen Vorrichtung bereit, das in Anspruch 9 definiert ist. Das Verfahren zeichnet sich dadurch aus, dass der Anschlag zunächst bahngeregelt in Förderrichtung verfahren wird und anschließend (vor oder während des Anlegens des Anschlages an eine Oberfläche des Werkstücks) auf ein kraftgeregeltes Verfahren des Anschlages in Förderrichtung umgeschaltet wird. Unter "bahngeregeltes" Verfahren des Anschlages ist dabei zu verstehen, dass dem Anschlagantrieb stets ein bestimmter Positionssollwert entlang der Förderrichtung vorgegeben wird, während beim "kraftgeregelten" Verfahren des Anschlages stets ein bestimmter Kraftsollwert in einer bestimmten Richtung vorgegeben wird. Durch dieses Umschalten wird stets nur eine vorbestimmte, bevorzugt geringe Kraft auf die jeweilige Oberfläche des Werkstücks aufgebracht, sodass die Beschädigungsgefahr des Werkstücks gering ist, während zuvor im bahngeregelten Betrieb extrem hohe Verfahrgeschwindigkeiten möglich werden, sodass der Anschlag zunächst im bahngeregelten Betrieb mit hoher Geschwindigkeit in eine gewünschte Vorlaufposition gebracht werden kann, um anschließend sanft - im kraftgeregelten Betrieb - an die Oberfläche des Werkstücks angelegt zu werden. Auf diese Weise werden hohe Geschwindigkeit und geringe Beschädigung des Werkstücks besonders vorteilhaft miteinander vereint.

Dabei kann das Umschalten von Bahn- auf Kraftregelung unmittelbar oder auch erst beim Anlegen des Anschlags an eine Oberfläche des Werkstücks erfolgen.

Das Verfahren des mindestens einen Bearbeitungsaggregats in Bezug auf den mindestens einen Anschlag kann auf unterschiedliche Art und Weise erfolgen. Ein besonders einfaches Steuerverfahren ergibt sich, wenn das mindestens eine Bearbeitungsaggregat in einer vorbestimmten, festen Relativbeziehung zu dem Anschlag verfahren wird.

Demgegenüber erhält man eine besonders hohe Flexibilität bei der Bearbeitung des jeweiligen Werkstücks, wenn das mindestens eine Bearbeitungsaggregat erst nach Beginn einer Verfahrbewegung des Anschlages in Förderrichtung in jeweils mindestens eine vorbestimmte Relativbeziehung zu dem Anschlag verfahren wird.

### Kurze Beschreibung der Zeichnungen

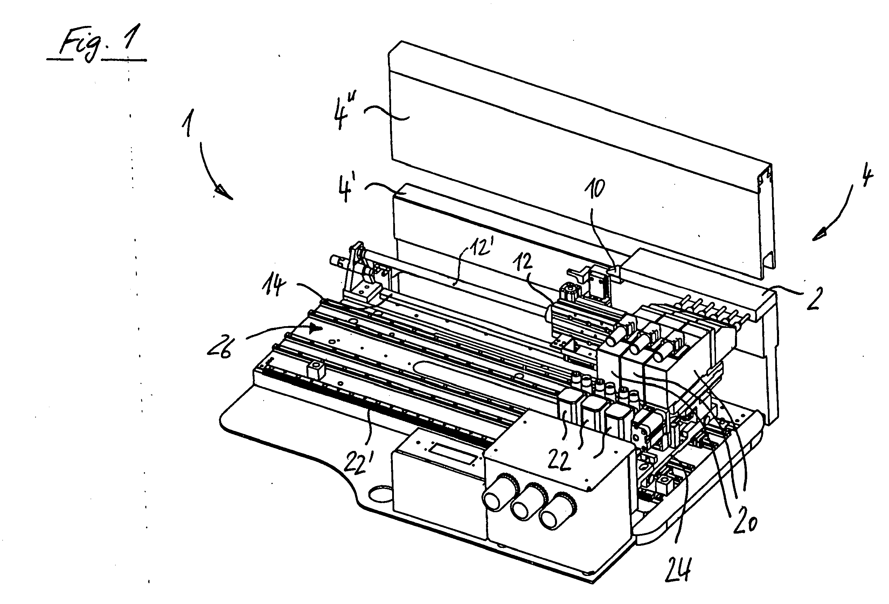

- Fig. 1: zeigt schematisch eine Perspektivansicht einer Bearbeitungsvorrichtung als bevorzugte Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitende Zeichnung beschrieben.

Eine Bearbeitungsvorrichtung 1 als bevorzugte Ausführungsform der vorliegenden Erfindung ist in Fig. 1 schematisch in einer Perspektivansicht dargestellt. Die Bearbeitungsvorrichtung dient in der vorliegenden Ausführungsform zum Bearbeiten von plattenförmigen Werkstücken 2, die aus Holz, Holzwerkstoffen, Kunststoff und unterschiedlichsten Verbundwerkstoffen bestehen können.

Die Bearbeitungsvorrichtung 1 umfasst zunächst eine Vorrichtung 4 zum Fördern der jeweiligen zu bearbeitenden Werkstücke 2, die in der vorliegenden Ausführungsform als Durchlauffördervorrichtung ausgebildet ist. Dabei kann die Fördervorrichtung 4 auf unterschiedlichste Art und Weise ausgestaltet sein, wobei sie in der vorliegenden Ausführungsform eine Unterkonstruktion 4', beispielsweise für einen Riemen, eine Kette, einen Luftkissenantrieb oder dergleichen besitzt und darüber hinaus ein Oberdruck 4'' zum Niederhalten und Führen der Werkstücke 2 vorgesehen ist. Darüber hinaus kann die Fördervorrichtung 4 auch dazu ausgelegt sein, die Werkstücke quasi-kontinuierlich oder getaktet zu fördern.

Im Bereich der Fördervorrichtung 4 ist ein Anschlag 10 angeordnet, der in Förderrichtung der Fördervorrichtung 4 (d.h. parallel zu dem jeweiligen Riemen, Kette, etc.) mittels eines Anschlagantriebes 12 verfahrbar ist. Dabei ist entscheidend, dass der Anschlag unabhängig von der Fördervorrichtung verfahrbar ist, sodass eine Relativbewegung zwischen dem Anschlag und den jeweiligen geförderten Werkstücken möglich ist. Der Anschlagantrieb ist in der vorliegenden Ausführungsform durch einen Linearmotor 12 gebildet, der entlang einer Schubstange 12' vorgeschoben wird und darüber hinaus über eine Anschlagführung 14 geführt ist.

Ferner umfasst die Bearbeitungsvorrichtung 1 eine Mehrzahl von Bearbeitungsaggregaten 20, bei denen es sich in der vorliegenden Ausführungsform um Bohraggregate mit jeweils zwei ausstellbaren Bohrspindeln handelt, obgleich selbstverständlich auch nur eine ausstellbare Bohrspindel vorgesehen sein kann. Ferner ist zu beachten, dass im Rahmen der vorliegenden Erfindung unterschiedlichste Bearbeitungsaggregate zum Einsatz kommen können, die geeignet sind, die oben genannten Werkstücke zu bearbeiten oder zu veredeln.

In der vorliegenden Ausführungsform weist jedes Bearbeitungsaggregat einen Aggregatantrieb 22 auf, die jeweils gemeinsam auf einem Schlitten 24 montiert sind, der jeweils über eine Schlittenführung 26 in Förderrichtung verfahrbar ist. Dabei steht der Aggregatantrieb 22 jeweils über ein nicht gezeigtes Ritzel mit einer Zahnstange 22' in Eingriff. Auf diese Weise können die Bearbeitungsaggregate jeweils unabhängig voneinander und unabhängig von dem Anschlag 10 in Förderrichtung verfahren werden. Bei den Aggregatantrieben 22 handelt es sich in der vorliegenden Ausführungsform um (rotatorisch arbeitende) Servomotoren, obgleich auch hier vorteilhaft Linearantriebe zum Einsatz kommen können.

Sowohl der Anschlagantrieb 12 als auch die Aggregatantriebe 22 besitzen jeweils eine nicht näher gezeigte Wegmesseinrichtung zum Messen des Verfahrweges des jeweiligen Antriebes in Förderrichtung. Diese Messdaten werden an eine nicht näher gezeigte Steuereinrichtung weitergegeben, die diese Daten auswertet und auf dieser Grundlage den Betrieb der Antriebe 12, 22 steuert.

Der Betrieb der erfindungsgemäßen Vorrichtung wird nachfolgend anhand von drei beispielhaften Betriebsarten beschrieben. Bei einer ersten Betriebsart wird jedes Bearbeitungsaggregat 20 vorab in eine vorbestimmte Relativposition zu dem Anschlag 10 gebracht, und diese wird "fix geschalten". Anschließend wird ein Werkstück 2 über die Fördervorrichtung 4 eingefördert, während gleichzeitig der Anschlag 10 und die Bearbeitungsaggregate 20 ebenfalls in Förderrichtung verfahren werden. Dabei wird die vorbestimmte Relativposition zwischen dem Anschlag 10 und den Bearbeitungsaggregaten 20 beibehalten, wobei der Anschlag 10 über den Anschlagantrieb 12 bahngeregelt verfahren wird. Kurz bevor das Werkstück 2 auf den Anschlag 10 trifft, wird der Betrieb des Anschlagmotors 12 von Bahnregelegung auf Kraftregelung umgeschaltet, sodass der Anschlag 10 mit einer vorbestimmten, geringen Kraft auf die vorlaufende Kante des Werkstücks 2 trifft. Nun können die Bearbeitungsaggregate 20 die gewünschte Bearbeitung ausführen, woraufhin der Anschlag 10 von der Vorderkante des Werkstücks 2 weg beschleunigt und aus der Förderbahn des Werkstücks 2 zurückgezogen wird, um für das nachfolgende Werkstück 2 in eine Bereitschaftsstellung entgegen der Durchlaufrichtung zurückgefahren zu werden.

Bei einer zweiten vorteilhaften Betriebsweise stehen der Anschlag 10 und die Bearbeitungsaggregate 20 zunächst nebeneinander in einer Bereitschaftsstellung. Die Steuerung des Anschlags 10 erfolgt wie vorstehend beschrieben. Demgegenüber werden die Bearbeitungsaggregate nicht in eine vorbestimmte Relativposition zum Anschlag gebracht, sondern fahren aus ihrer Bereitschaftsposition je nach gewünschten Bohrungs-/Bearbeitungsraster nacheinander los und vollziehen ihre Bearbeitung. Nachdem auch das letzte Bearbeitungsaggregat 20 die Bearbeitung vollzogen hat, fahren sowohl der Anschlag 10 als auch die Bearbeitungsaggregate 20 in die Bereitschaftsstellung zurück und erwarten das nächste Werkstück 2. bei dieser Bearbeitungsweise ergibt sich ein besonders geringer Platzbedarf für die Aggregate, was beträchtliche Kosteneinsparungen sowohl an den Aggregaten als auch an der Grundmaschine zur Folge hat.

Bei einer dritten, vorteilhaften Betriebsweise der erfindungsgemäßen Bearbeitungsvorrichtung, die auf der vorstehend beschriebenen, zweiten Betriebsweise beruht, führt mindestens ein Bearbeitungsaggregat 20 zwei oder mehr Bearbeitungsvorgänge aus. Der Servoantrieb des jeweiligen Bearbeitungsaggregats 20 wird dabei während des jeweiligen Bearbeitungszyklus, d.h. während der Anschlag 10 im Zuge des Durchlaufs an dem Werkstück 2 anliegt, relativ zum Anschlag 10 neu positioniert, um eine weitere Bearbeitung auszuführen. Dies alles erfolgt während des Durchlaufbetriebes, sodass mit einer geringen Anzahl von Bearbeitungsaggregaten 20 vielfältige Bearbeitungsvorgänge ausgeführt werden können, wodurch die Konstruktion der Vorrichtung vereinfacht wird und entsprechende Kosteneinsparungen erzielt werden können. Darüber hinaus ergibt sich eine hohe Flexibilität bei der Festlegung des Bearbeitungsrasters.

## Patentansprüche

1. Vorrichtung (1) zum Bearbeiten von platten- oder leistenförmigen Werkstücken (2), die zumindest teilweise aus Holz, Holzwerkstoffen, Kunststoff oder dergleichen bestehen, umfassend:
eine Fördervorrichtung (4) zum Fördern der zu bearbeitenden Werkstücke (2); im Durchlauf oder Taktbetrieb,
mindestens einen Anschlag (10), der einen Anschlagantrieb (12) aufweist und in Förderrichtung der Fördervorrichtung (4) gegenüber dieser verfahrbar ist, und
mindestens ein Bearbeitungsaggregat (20) zum Bearbeiten der Werkstücke (2), das in Förderrichtung der Fördervorrichtung (4) verfahrbar ist,
**dadurch gekennzeichnet, dass**
das mindestens eine Bearbeitungsaggregat (20) mindestens einen Aggregatantrieb (22) aufweist, so dass der mindestens eine Anschlag (10) und das mindestens eine Bearbeitungsaggregat (20) in Förderrichtung unabhängig voneinander verfahrbar sind.

2. Vorrichtung nach Anspruch 1, **dadurch gekennzeichnet, dass** sie eine Mehrzahl von Bearbeitungsaggregaten (20) aufweist, die einzeln oder gruppenweise in Förderrichtung unabhängig voneinander verfahrbar sind.

3. Vorrichtung nach Anspruch 1 oder 2, **dadurch gekennzeichnet, dass** der mindestens eine Anschlagantrieb (12) und/oder der mindestens eine Aggregatantrieb einen Linearantrieb aufweist.

4. Vorrichtung nach einem der vorhergehenden Ansprüche, **dadurch gekennzeichnet, dass** der mindestens eine Anschlagantrieb (12) und/oder der mindestens eine Aggregatantrieb (22) jeweils eine Wegmesseinrichtung zum Messen des Verfahrweges aufweist.

5. Vorrichtung nach einem der vorhergehenden Ansprüche, **dadurch gekennzeichnet, dass** sie ferner eine Steuereinrichtung aufweist, die bevorzugt mit der mindestens einen Wegmesseinrichtung in Verbindung steht.

6. Vorrichtung nach einem der vorhergehenden Ansprüche, **dadurch gekennzeichnet, dass** das mindestens eine Bearbeitungsaggregat (20) und der mindestens eine Aggregatantrieb (22) jeweils auf einem Schlitten (24) montiert sind, der entlang der Fördereinrichtung auf einer Führung (26) verschiebbar ist.

7. Vorrichtung nach einem der vorhergehenden Ansprüche, **dadurch gekennzeichnet, dass** mindestens ein Bearbeitungsaggregat (20) dazu vorgesehen ist, eine spanende Bearbeitung der Werkstücke auszuführen.

8. Vorrichtung nach einem der vorhergehenden Ansprüche, **dadurch gekennzeichnet, dass** mindestens ein Bearbeitungsaggregat dazu vorgesehen ist, Dübel in die Werkstücke einzubringen.

9. Verfahren zum Bearbeiten von platten- oder leistenförmigen Werkstücken (2), die zumindest teilweise aus Holz, Holzwerkstoffen, Kunststoff oder dergleichen bestehen, unter Einsatz einer Vorrichtung (1) nach einem der vorhergehenden Ansprüche, mit den Schritten:
Fördern eines zu bearbeitenden Werkstücks (2) mittels der Fördereinrichtung (4),
bahngeregeltes Verfahren des Anschlages (10) in Förderrichtung,
Anlegen des Anschlages (10) an eine Oberfläche des Werkstücks (2), und
Umschalten auf kraftgeregeltes Verfahren des Anschlages (10) in Förderrichtung.

10. Verfahren nach Anspruch 9, **dadurch gekennzeichnet, dass** das Umschalten von Bahn- auf Kraftregelung unmittelbar vor oder beim Anlegen des Anschlages (10) an eine Oberfläche des Werkstücks (2) erfolgt.

11. Verfahren nach Anspruch 9 oder 10, **dadurch gekennzeichnet, dass** das mindestens eine Bearbeitungsaggregat (20) in einer vorbestimmten, festen Relativbeziehung zu dem Anschlag (10) verfahren wird.

12. Verfahren nach Anspruch 9 oder 10, **dadurch gekennzeichnet, dass** das mindestens eine Bearbeitungsaggregat (20) erst nach Beginn einer Verfahrbewegung des Anschlages (10) in Förderrichtung in jeweils mindestens eine vorbestimmte Relativbeziehung zu dem Anschlag (10) verfahren wird.

## Claims

1. Device (1) for machining sheet- or strip-shaped workpieces (2) consisting at least in part of wood, wood materials, plastic or the like comprising:
a conveyor device (4) for conveying the workpieces (2) to be machined in a single pass or in cyclical operation;
at least one stop (10) which has a stop drive (12) and is movable with respect to the latter in the conveying direction of the conveyor device (4); and
at least one machining unit (20) for machining the workpieces (2) which is movable in the conveying direction of the conveyor device (4),
**characterised in that**
the at least single machining unit (20) has at least one unit drive (22) so that the at least single stop (10) and the at least single machining unit (20) are movable independently of one another in the conveying direction.

2. Device according to claim 1, **characterised in that** it comprises a plurality of machining units (20) which singly or in groups are movable independently of one another in the conveying direction.

3. Device according to claim 1 or 2, **characterised in that** the at least single stop drive (12) and/or the at least single unit drive has a linear drive.

4. Device according to any of the preceding claims, **characterised in that** the at least single stop drive (12) and/or the at least single unit drive (22) each has a travel measuring device for measuring the path traversed.

5. Device according to any of the preceding claims, **characterised in that** it further comprises a control device which is preferably connected to the at least single travel measuring device.

6. Device according to any of the preceding claims, **characterised in that** the at least single machining unit (20) and the at least single unit drive (22) are each mounted on a carriage (24) which is displaceable on a guide (26) in the conveying direction.

7. Device according to any of the preceding claims, **characterised in that** at least one machining unit (20) is provided for the purpose of executing machining of the workpieces by removal of material.

8. Device according to any of the preceding claims, **characterised in that** at least one machining unit is provided for the purpose of introducing dowels into the workpieces.

9. Method for machining sheet- or strip-shaped workpieces (2) consisting at least in part of wood, wood materials, plastic or the like using a device (1) according to any of the preceding claims having the steps:
conveying a workpiece (2) to be machined by means of the conveying device (4);
track-controlled movement of the stop (10) in the conveying direction;
placing the stop (10) against a surface of the workpiece (2); and
switching over to power-controlled movement of the stop (10) in the conveying direction.

10. Method according to claim 9, **characterised in that** the switching over from track- to power-control ensues immediately before or on placement of the stop (10) against a surface of the workpiece (2).

11. Method according to claim 9 or 10, **characterised in that** the at least single machining unit (20) is moved in a predetermined fixed relative relationship to the stop (10).

12. Method according to claim 9 or 10, **characterised in that** the at least single machining unit (20) is moved in each case into at least one predetermined relative relationship to the stop (10) only after the beginning of a travel movement of the stop (10) in the conveying direction.

## Revendications

1. Dispositif (1) pour l'usinage de pièces d'oeuvre (2) en forme de plaques ou de baguettes, composées, au moins partiellement, de bois, de matériaux ligneux, de matière synthétique ou analogue, comprenant :
un dispositif de transport (4), pour transporter les pièces d'oeuvre (2) à usiner, en continu et de façon cadencée,
au moins une butée (10), présentant un entraînement de butée (12) et déplaçable dans la direction de transport du dispositif de transport (4), par rapport à celui-ci,
au moins un groupe d'usinage (20), pour usiner les pièces d'oeuvre (2), le groupe étant déplaçable dans la direction de transport du dispositif de transport (4),
**caractérisé en ce qu'**
au moins un groupe d'usinage (20) présente au moins un entraînement de groupe (22), de manière que la au moins une butée (10) et le au moins un groupe d'usinage (20) soient déplaçables dans la direction de transport, indépendamment les uns des autres.

2. Dispositif selon la revendication 1, **caractérisé en ce qu'**il présente une pluralité de groupes d'usinage (20), déplaçables individuellement ou par groupes, dans la direction de transport, indépendamment les uns des autres.

3. Dispositif selon la revendication 1 ou 2, **caractérisé en ce que** le au moins un entraînement de butée (12) et/ou le au moins un entraînement de groupe présente(nt) un entraînement linéaire.

4. Dispositif selon l'une des revendications précédentes, **caractérisé en ce que** le au moins un entraînement de butée (12) et/ou le au moins un entraînement de groupe (22) présente(nt) chacun un dispositif de mesure de course, pour mesurer la course de déplacement.

5. Dispositif selon l'une des revendications précédentes, **caractérisé en ce qu'**il présente en outre un dispositif de commande, relié de préférence audit au moins un dispositif de mesure de course.

6. Dispositif selon l'une des revendications précédentes, **caractérisé en ce que** le au moins un groupe d'usinage (20) et le au moins un entraînement de groupe (22) sont chacun montés sur un chariot (24), déplaçable le long de la direction de transport, sur un guidage (26).

7. Dispositif selon l'une des revendications précédentes, **caractérisé en ce qu'**au moins un groupe d'usinage (20) est prévu pour effectuer un usinage, avec enlèvement de copeaux, des pièces d'oeuvre.

8. Dispositif selon l'une des revendications précédentes, **caractérisé en ce qu'**au moins un groupe d'usinage (20) est prévu pour introduire des chevilles dans les pièces d'oeuvre.

9. Procédé d'usinage de pièces d'oeuvre (2) en forme de plaques ou de baguettes, composées, au moins partiellement, de bois, de matériaux ligneux, de manière synthétique ou analogue, faisant utilisation d'un dispositif (1) selon l'une des revendications précédentes, comprenant les étapes de :
transport d'une pièce d'oeuvre (2) à usiner, au moyen du dispositif de transport (4),
déplacement, à régulation de trajectoire, de la butée (10) dans la direction de transport,
application de la butée (10) sur une surface de la pièce d'oeuvre (2), et
commutation de passage à un déplacement, à régulation d'effort, de la butée (10) dans la direction de transport.

10. Procédé selon la revendication 9, **caractérisé en ce que** la commutation, d'une régulation de trajectoire à une régulation d'effort, est effectuée directement avant, ou lors de l'application de la butée (10) sur une surface de la pièce d'oeuvre (2).

11. Procédé selon la revendication 9 ou 10, **caractérisé en ce que** le au moins un groupe d'usinage (20) est déplacé vers la butée (10), selon une relation relative fixe, prédéterminée.

12. Procédé selon la revendication 9 ou 10, **caractérisé en ce que** le au moins un groupe d'usinage (20) est déplacé vers la butée (10), seulement, après le début d'un mouvement de déplacement de la butée (10) dans la direction de transport, selon, chaque fois, une relation relative, prédéterminée.
